Europäisches Patentamt

European Patent Office

Office européen des brevets

(11) Numéro de publication: **0 373 024**
**A1**

## (12) DEMANDE DE BREVET EUROPEEN

(21) Numéro de dépôt: 89403239.0

(22) Date de dépôt: 23.11.89

(51) Int. Cl.5: **A47D 1/00, B60N 2/24,**
**A47C 5/12**

(30) Priorité: 02.12.88 FR 8815815

(43) Date de publication de la demande:
**13.06.90 Bulletin 90/24**

(84) Etats contractants désignés:
**BE CH DE ES GB GR IT LI NL SE**

(71) Demandeur: **BABY RELAX SOCIETE EN NOM**
**COLLECTIF Société en nom collectif dite :**
**2, rue Balzac**
**F-75008 Paris(FR)**

(72) Inventeur: **Deloustal, Bernard**
**Lotissement Majourau**
**F-64390 Sauveterre de Bearn(FR)**

(74) Mandataire: **Orès, Bernard et al**
**Cabinet ORES 6, Avenue de Messine**
**F-75008 Paris(FR)**

(54) **Dispositif de siège inclinable pour nourrisson.**

(57) Dispositif de siège inclinable pour nourrisson comportant une coque en matièe plastique conformée suivant un dossier prolongé par une surface d'assise, et d'inclinaison réglable par rapport à une embase qui la supporte.

L'embase (11), de même que la coque, est constituée par une pièce moulée à double parois et la coque étant montée à articulation sur l'embase (11) des moyens à bossages et rainures de formes conjuguées sont prévus sur l'embase (11) et la coque (10) pour définir au moins deux positions prédéterminées d'inclinaison différente de ladite coque (10) par rapport à l'embase (11).

FIG.6

EP 0 373 024 A1

## DISPOSITIF DE SIEGE INCLINABLE POUR NOURRISSON

L'invention a pour objet un dispositif de siège inclinable pour nourrisson propre à être utilisé en tant que siège d'appartement et/ou d'automobile.

On connaît déjà diverses réalisations de sièges inclinables pour nourrissons, c'est-à-dire adaptés au maintien en position assise au couchée d'un bébé depuis sa naissance jusqu'à environ deux ans et qui sont constitués par une coque de matière plastique injectée à simple paroi montée sur une embase également en matière plastique injectée ou, en variante, sur un piètement métallique. Pour faire varier l'inclinaison du dossier et de la surface d'assise des secteurs crantés sont rapportés sur la coque et des moyens de verrouillage sont prévus sur l'embase pour fixer la position d'inclinaison choisie. Le nombre de pièces de tels dispositifs en accroît bien entendu le coût, d'une part, mais aussi le poids de même que le risque de défauts ou d'endommagements desdites pièces, de sorte que des parties constitutives du dispositif doivent être stockées en permanence ce qui en augmente encore le prix de revient.

C'est, par conséquent, un but général de l'invention de fournir un dispositif perfectionné de siège inclinable pour nourrisson qui pallie les inconvénients rapportés ci-dessus des dispositifs connus.

C'est, encore, un but de l'invention de fournir un tel dispositif de siège qui soit d'une grande simplicité de fabrication, avec pour conséquence un coût de revient réduit, et cela sans que soit porté atteinte au confort du nourrisson ou à la protection recherchée pour lui.

C'est, également, un but de l'invention de fournir un tel dispositif de siège inclinable pour nourrisson qui soit de faible poids mais qui, cependant, présente les qualités mécaniques requises, en particulier de rigidité, pour satisfaire aux impératifs de sécurité exigés par les utilisateurs.

Un dispositif de siège inclinable pour nourrisson selon l'invention, comportant une coque en matière plastique conformée suivant un dossier prolongé par une surface d'assise, et d'inclinaison réglable par rapport à une embase qui la supporte est caractérisé en ce que ladite embase, de même que la coque, est constituée par une pièce moulée à double parois et en ce que ladite coque étant montée à articulation sur l'embase des moyens à bossages et rainures de formes conjuguées sont prévus sur l'embase et la coque pour définir au moins deux positions prédéterminées d'inclinaison différente de ladite coque par rapport à l'embase.

Dans une forme de réalisation de l'invention, on fait application pour le passage d'une position d'inclinaison à une autre et inversement, de la déformation localisée d'une des deux pièces moulées constitutives de la coque et de l'embase.

Dans une forme de réalisation préférée, c'est la paroi interne de l'embase qui se déforme localement lors du passage d'une position d'inclinaison à une autre et inversement.

Dans une autre forme de réalisation, on fait application pour le passage d'une position d'inclinaison à une autre position, et vice-versa, d'un certain jeu relatif ménagé au niveau de l'articulation de la coque sur l'embase.

Quelle que soit la forme de réalisation, la coque et l'embase sont l'une et/ou l'autre avantageusement fabriquées par roto-moulage, sans que cette indication ait quelque caractère limitatif que ce soit, d'autres procédés de fabrication pouvant également être mis en oeuvre, comme par exemple des procédés d'extrusion-soufflage ou analogue.

D'autres caractéristiques et avantages de l'invention apparaîtront de la description qui suit, faite à titre d'exemple et en référence au dessin annexé dans lequel :

- la figure 1 est une vue schématique en perspective d'une coque conformée suivant un dossier prolongé par un siège proprement dit d'un dispositif selon l'invention ;
- la figure 2 est une vue en perspective d'une embase du dispositif ;
- la figure 3 est une vue schématique en élévation de la coque montrée sur la figure 1 ;
- la figure 4 est une vue schématique partie en coupe, partie en élévation, du dispositif selon l'invention dans une première position;
- la figure 5 est une vue analogue à celle de la figure 4 mais pour une autre position ;
- la figure 6 est une vue analogue à celle des figures 4 et 5, mais pour le dispositif monté sur le siège d'un véhicule automobile.

Un dispositif de siège inclinable pour nourrisson selon l'invention propre à être utilisé en tant que siège d'appartement et/ou d'automobile comprend essentiellement une coque 10 montée à articulation sur une embase 11. La coque 10, selon l'invention, est constituée par une pièce moulée creuse, et ainsi à double parois, façonnée par roto-moulage de matière plastique ou extrusion-soufflage ou tout autre procédé analogue pour ménager une surface d'assise 12, un dossier 13 et, de part et d'autre de la surface d'assise et du dossier, des parois 14 et 15 de protection d'un nourrisson occupant le siège ainsi quelque peu en forme de siège baquet. Sur les faces externes des deux parois 14 et 15 sont prévus des tourillons 16 et 17 matérialisant l'axe d'articulation de la coque sur l'embase 11.

Conformément à l'invention, cette dernière est elle aussi une pièce moulée à double parois obtenue par roto-moulage, ou extrusion-soufflage, d'une matière plastique pour constituer un fond 20 ménageant une surface d'appui 21 sur un support et à partir duquel sont érigées deux oreilles 22 et 23 à contour général de triangle à sommets arron dis, perçées d'orifices 24 et 25, respectivement, pour le passage des tourillons d'articulation 16 et 17, respectivement, de la coque 10.

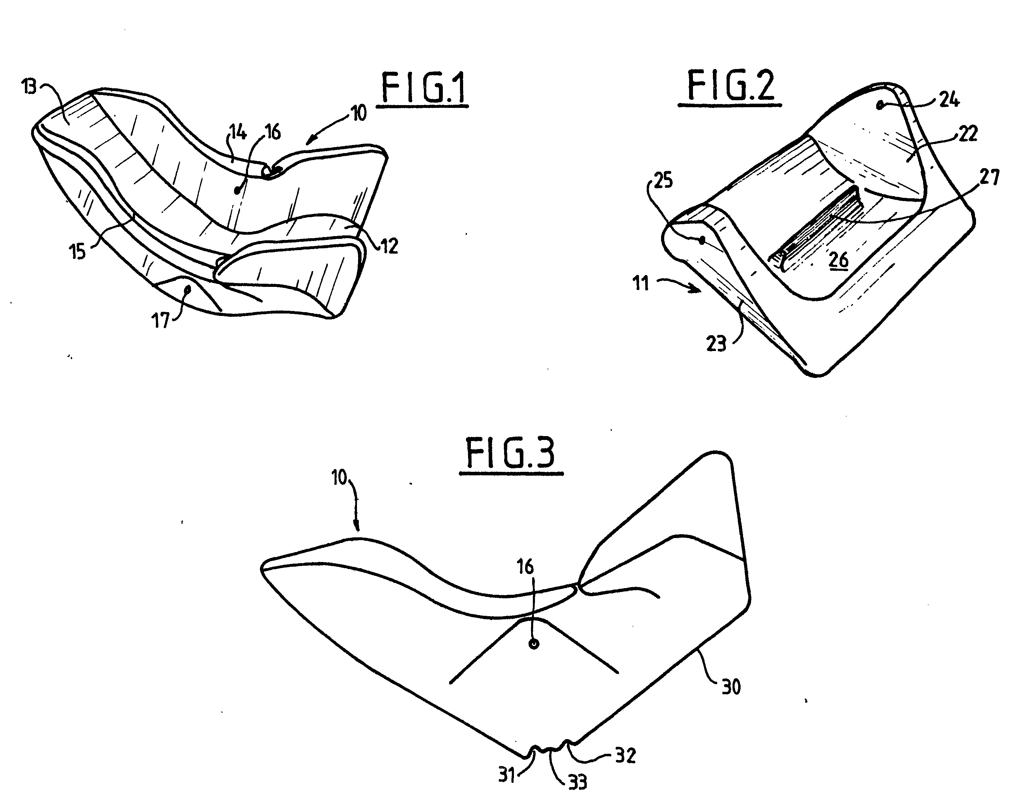

Comme bien montré sur les figures 4, 5 et 6, le fond 20 de l'embase 11 est conformé sur sa face interne 26, incurvée, suivant une nervure ou bossage 27 régnant sensiblement entre les deux oreilles 22 et 23 et, de façon analogue, la paroi externe de la coque 10 est conformée sur sa face externe 30, quelque peu à l'aplomb de l'axe d'articulation matérialisé par les tourillons 16 et 17, suivant deux rainures 31 et 32 de section droite conjuguée de celle de la nervure ou bossage 27. Entre les deux rainures 31 et 32 la face externe de la coque 10 présente un méplat 33.

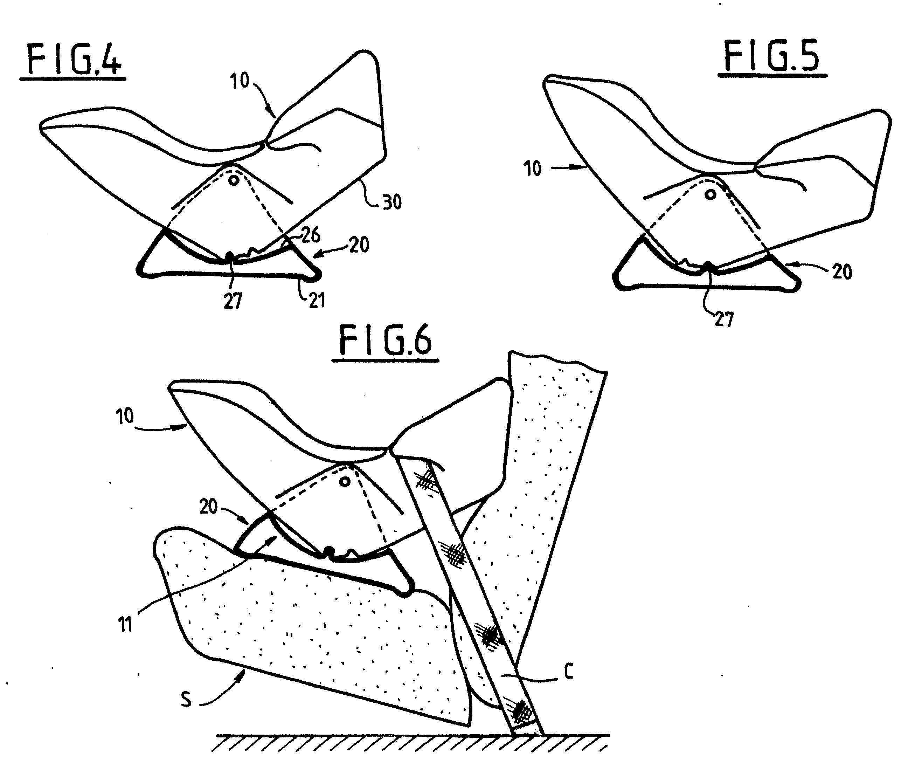

Après que la coque 10 ait été montée à articulation sur l'embase 11, ladite coque est immobilisée en une première position par rapport à l'embase par coopération de la nervure ou bossage 27 avec, par exemple, la rainure 31, c'est-à-dire dans la condition montrée sur la figure 4 qui est celle pour laquelle le nourrisson est en position couchée. Si l'on souhaite passer à la position assise, c'est-à-dire à la position montrée sur la figure 5, il suffit de faire pivoter la coque par rapport à l'embase pour amener la nervure ou bossage 27 à coopérer avec la rainure 32, après franchissement du méplat 33.

Dans une première forme de réalisation on fait application, pour le passage d'une position d'inclinaison à l'autre, de la déformation localisée d'une paroi des pièces moulées 10 et 11.

Dans un premier mode d'exécution, la paroi externe 30 de la coque 10 est relativement dure et la paroi interne 26 de l'embase 11 plus aisément déformable pour permettre d'abord l'extraction de la nervure 27 hors de la rainure 31, puis après passage du méplat 33 et sous l'effet de l'élasticité inhérente aux parois, l'introduction de la nervure 27 dans la rainure 32, le passage de la position assise à la position couchée étant effectué de la même manière, mais par un processus inverse.

Dans un second mode d'exécution, la paroi externe de la coque 10 est plus aisément déformable et la paroi interne 26 de l'embase 11 est relativement dure pour permettre d'abord l'extraction de la nervure 27 hors de la rainure 31 puis après passage du méplat 33 et sous l'effet de l'élasticité inhérente aux parois, l'introduction de la nervure 27 dans la rainure 32, le passage de la position assise à la position couchée étant effectuée de la même manière mais par un processus inverse.

Dans une autre forme de réalisation, on fait application pour le passage d'une position d'inclinaison à une autre, et vice versa, d'un jeu relatif ménagé au niveau de l'articulation matérialisée par les axes des tourillons 16, 17 et ceux des orifices 24, 25.

Dans un premier mode d'exécution, le jeu est obtenu en conformant les orifices 24 et 25 suivant des boutonnières ou lumières de plus grande longueur que le diamètre des tourillons 16 et 17, alors que dans un second mode d'exécution, le jeu est prévu au niveau de l'articulation de la coque 10.

Dans l'un ou l'autre des deux modes d'exécution mentionnés en dernier lieu, aussi bien la paroi externe 30 de la coque 10 que la paroi interne 26 de l'embase 11 peuvent être réalisées sans possibilité de déformation locale, c'est-à-dire en conservant à la totalité des pièces moulées 10 et 11 la rigidité qui leur est impartie de fabrication en fonction du poids de matière mise en oeuvre.

Quel que soit le mode de réalisation, cette rigidité est choisie pour satisfaire aux impératifs de sécurité, notamment lorsque, comme montré sur la figure 6, le dispositif de siège est utilisé pour le transport d'un nourrisson dans une automobile, le plus simplement en posant l'embase 11 sur le siège avant ou arrière S de l'automobile où il est immobilisé à l'aide de la sangle d'une ceinture de sécurité C.

Un dispositif tel que décrit ci-dessus est particulièrement avantageux pour servir de siège à un nourrisson de la naissance de celui-ci jusqu'à qu'il ait atteint un poids d'environ 9 Kg.

## Revendications

1. Dispositif de siège inclinable pour nourrisson comportant une coque en matière plastique conformée suivant un dossier prolongé par une surface d'assise, et d'inclinaison réglable par rapport à une embase qui la supporte, caractérisé en ce que ladite embase (11), de même que la coque, est constituée par une pièce moulée double parois et en ce que ladite coque étant montée à articulation sur l'embase (11) des moyens à bossages et rainures (27 ; 31, 32) de formes conjuguées sont prévus sur l'embase (11) et ladite coque (10) pour définir au moins deux positions prédéterminées d'inclinaison différente de ladite coque (10) par rapport à l'embase (11).

2. Dispositif selon la revendication 1, caractérisé en ce que lesdits moyens à bossages et rainures de formes conjuguées sont constitués par une nervure (27) de l'embase et deux rainures (31, 32) de la coque (10).

3. Dispositif selon la revendication 1, caractérisé en ce que l'une au moins des deux pièces moulées constitutives de l'embase (11) et de la coque (10) présente une zone plus aisément déformable localement au voisinage desdits bossages et rainures (27 ; 31, 32).

4. Dispositif selon la revendication 3, caractérisé en ce que ladite zone plus aisément déformable est ménagée sur la paroi interne (26) de l'embase (11).

5. Dispositif selon la revendication 3, caractérisé en ce que ladite zone plus aisément déformable est ménagée sur la paroi externe de la coque (10).

6. Dispositif selon la revendication 1, caractérisé en ce qu'un jeu relatif est ménagé au niveau de l'articulation de la coque (10) sur l'embase (11).

7. Dispositif selon la revendication 6, caractérisé en ce que le jeu résulte de la forme en boutonnière ou lumière allongée d'ouvertures (24, 25) de l'embase (11) avec lesquelles sont propres à coopérer des tourillons (16, 17) de la coque pour le montage à articulation de celle-ci sur l'embase.

8. Dispositif selon l'une quelconque des revendications précédentes, caractérisé en ce que les pièces moulées en matière plastique sont façonnées par roto-moulage, extrusion-soufflage ou un procédé de moulage analogue.

FIG.1

FIG.2

FIG.3

EP 0 373 024 A1

FIG.4

10

30

26

20

27

21

FIG.5

10

20

27

FIG.6

10

20

11

S

C

EP 0 373 024 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 370 885  (GALE) <br> * Colonne 2, ligne 49 - colonne 3, ligne 62; figures 1-5 * <br> --- | 1,2,8 | A 47 D    1/00 <br> B 60 N    2/24 <br> A 47 C    5/12 |
| A | US-A-3 441 310  (GALE) <br> * Colonne 2, lignes 32-44; figures 1,2,4,5,7 * <br> --- | 1 | |
| A | EP-A-0 228 158  (ASE) <br> --- | | |
| A | FR-A-2 227 719  (EZQUERRA) <br> ----- | | |

**DOMAINES TECHNIQUES RECHERCHES (Int. Cl.5)**

A 47 C
B 60 N
A 47 D

Le présent rapport a été établi pour toutes les revendications

| Lieu de la recherche | Date d'achèvement de la recherche | Examinateur |
|---|---|---|
| LA HAYE | 09-03-1990 | VANDEVONDELE J.P.H. |